(19) Europäisches Patentamt
European Patent Office
Office européen des brevets

(11) EP 1 455 551 A2

(12) **DEMANDE DE BREVET EUROPEEN**

(43) Date de publication:
**08.09.2004 Bulletin 2004/37**

(51) Int Cl.[7]: **H04Q 11/00**

(21) Numéro de dépôt: **04290330.2**

(22) Date de dépôt: **09.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **04.03.2003 FR 0302603**

(71) Demandeur: **ALCATEL**
**75008 Paris (FR)**

(72) Inventeur: **Zami, Thierry**
**91300 Massy (FR)**

(74) Mandataire: **Fournier, Michel Robert Marie et al**
**Compagnie Financière Alcatel,**
**Département de Propriété Industrielle**
**5, rue Noel Pons**
**92734 Nanterre Cedex (FR)**

(54) **Module de selection pour commutateur de signaux optiques et commutateur de signaux optiques**

(57) La présente invention concerne un module de sélection $M_k$ pour commutateur de signaux optiques. Ce module de sélection $M_k$ pour commutateur de signaux optiques comporte un sélecteur spatial $SE_1$ comprenant une pluralité d'entrées recevant chacune un signal optique multiplexé en longueur d'onde comportant une pluralité de canaux associés chacun à une longueur d'onde et une sortie recevant un signal sélectionné parmi ladite pluralité de signaux multiplexés en longueur d'onde. Le module $M_k$ comporte également une pluralité de sélecteurs spectraux $SE_{21}$,..., $SE_{2k}$, chacun desdits sélecteurs spectraux réalisant la sélection d'un canal différent parmi la pluralité de canaux dudit signal sélectionné par ledit sélecteur spatial $SE_1$.

FIG_3

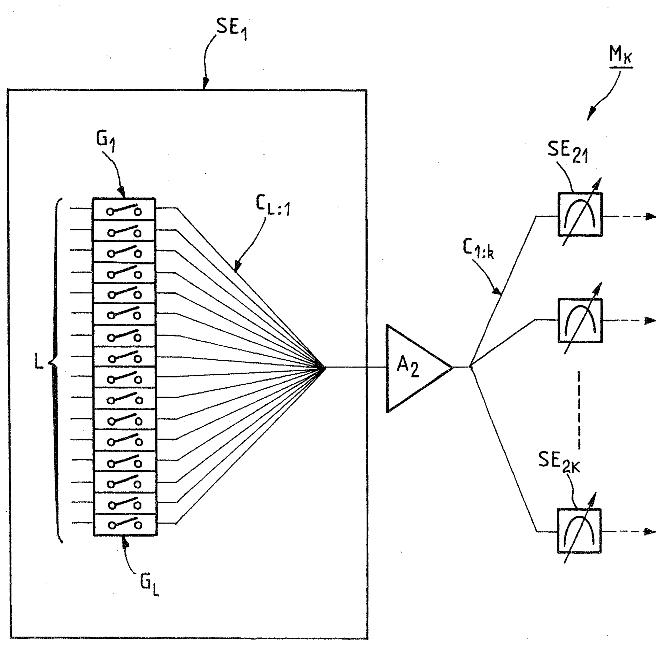




Printed by Jouve, 75001 PARIS (FR)

## Description

La présente invention concerne un module de sélection pour commutateur de signaux optiques.

Les télécommunications connaissent un développement important. De plus en plus d'utilisateurs (particuliers et entreprises) transmettent un nombre croissant de messages dans les réseaux de télécommunication. En outre, ces messages comportent une quantité de plus en plus élevée d'informations, par exemple lors de l'envoi d'images. Pour répondre à cette demande grandissante en débit d'informations, les opérateurs des réseaux de télécommunication utilisent la transmission optique des signaux. Cette transmission utilise la modulation, suivant l'information à transmettre, de signaux optiques, en général produits par des lasers, puis la propagation de ces signaux modulés dans un réseau à guides ou fibres optiques.

La transmission optique des signaux comporte plusieurs avantages. En particulier, les atténuations du signal lors de la transmission sont moindres que dans le cas de signaux électriques et les fibres optiques ont une résistance mécanique plus élevée pour un poids plus faible que leurs équivalents électriques. Mais les principaux avantages sont la large bande passante des fibres optiques et la possibilité de faire transiter simultanément plusieurs porteuses de longueurs d'onde distinctes dans une même fibre. Cette dernière technique, dite du multiplexage en longueur d'onde, permet d'atteindre des débits d'information de l'ordre du Gigabits/s et même du Térabits/s.

Parallèlement au multiplexage en longueur d'onde, le multiplexage temporel permet la transmission simultanée de plusieurs communications sur une même porteuse. En effet, dans ce mode de transmission, chaque porteuse transmet des paquets relatifs à divers messages dont les informations ont été découpées en paquets envoyés dans le réseau avec un en-tête indiquant leur destination. Lorsque le paquet traverse un dispositif de commutation, celui-ci bloque ses ressources durant l'intervalle de temps nécessaire à l'acheminement du paquet vers la sortie demandée. Ensuite ses ressources physiques deviennent libres pour la commutation d'un autre paquet. Puisque les paquets ont une durée temporelle limitée, de l'ordre de la microseconde, de nombreuses communications peuvent être transmises en un court intervalle de temps. Cette politique de routage est actuellement utilisée par le plus important des réseaux Internet.

La multitude de signaux transmis par les réseaux nécessite d'introduire des commutateurs pour diriger les signaux reçus sur une pluralité d'entrées correspondant à un premier ensemble de fibres optiques vers une pluralité de sorties correspondant à un deuxième ensemble de fibres optiques. Certains commutateurs permettent, par une commande appropriée, de diffuser un signal provenant d'une entrée et de sélectionner la sortie du commutateur sur laquelle ce signal doit être envoyé. On parle de commutateur de diffusion et sélection (« broadcast and select » en anglais).

Un tel commutateur 10 est représenté en figure 1.

Le commutateur 10 comporte :

- $P_e$ ports d'entrée reliés chacun à une fibre optique d'entrée $I_j$ (j variant de 1 à $P_e$),
- $P_e$ démultiplexeurs $DI_1$ à $DI_{Pe}$,
- $LxC_e$ régénérateurs optiques $RI_i$ (i variant de 1 à $LXC_e$),
- L multiplexeurs $MI_1$ à $Mi_L$,
- L amplificateurs $A_1$ à $A_L$,
- L coupleurs $D_1$ à $D_L$,
- $C_sxP_s$ modules de sélection $S_1$ à $S_{CsxPs}$,
- $C_sxP_s$ régénérateurs optiques $RO_k$ (k variant de 1 à $C_sXP_s$),
- $P_s$ multiplexeurs $MO_1$ à $MO_{Ps}$,
- $P_s$ ports de sorties reliés chacun à une fibre optique de sortie $O_m$ (m variant de 1 à $P_s$).

Chaque port d'entrée reçoit sur une des fibres d'entrées $I_j$ un signal WDM (multiplexé en longueur d'onde ou « wavelength-division multiplexing » en anglais).

Ces signaux sont démultiplexés par les $P_e$ démultiplexeurs $DI_1$ à $DI_{Pe}$.

Ces signaux démultiplexés sont ensuite chacun régénérés par les régénérateurs optiques $RI_i$ qui réamplifient et remettent en forme les impulsions optiques des signaux. Les régénérateurs optiques $RI_i$ peuvent également modifier la longueur d'onde associée à chacun des signaux.

Les signaux régénérés sont ensuite multiplexés par les L multiplexeurs $MI_1$ à $MI_L$, chaque multiplexeur ayant $C_e$ entrées et fournissant en sortie un signal $F_t$ (t variant de 1 à L).

$F_t$ est un signal multiplexé WDM comportant $C_e$ canaux associés respectivement à des longueurs d'onde distinctes appartenant à un peigne WDM prédéfini.

Chacun des signaux $F_t$ est amplifié par l'amplificateur $A_t$ qui est par exemple un amplificateur à fibres dopées à l'erbium puis est diffusé par un des L coupleurs $D_1$ à $D_L$, vers une entrée correspondante de chacun des $C_sxP_s$ modules de sélection $S_1$ à $S_{CsxPs}$, chaque module de sélection ayant L entrées et une sortie.

Un module de sélection S tel qu'utilisé dans le commutateur représenté en figure 1 est représenté en figure 2.
Le module de sélection S comporte :

- un sélecteur spatial $SE_1$,
- un sélecteur spectral $SE_2$.

Le sélecteur spatial $SE_1$ comporte :

- L portes optiques $G_t$ (t variant de 1 à L) ayant des entrées qui constituent respectivement L entrées du sélecteur spatial $SE_1$,
- un coupleur optique $C_{L:1}$ permettant de coupler sélectivement par l'intermédiaire des portes optiques ces L entrées à une sortie unique qui constitue la sortie du sélecteur spatial.

Chaque porte optique $G_t$ (ou interrupteur optique) est typiquement un amplificateur optique à semiconducteur alimenté uniquement lorsqu'il doit transmettre un signal.
Chacune des L entrées reçoit un signal WDM $F_t$ comportant donc une pluralité de canaux associés chacun à une longueur d'onde.
Ainsi, le sélecteur spatial $SE_1$ permet d'envoyer sur sa sortie un seul des L signaux $F_t$ reçus.
Le sélecteur spectral $SE_2$.permet de sélectionner un seul canal parmi la pluralité canaux du signal $F_t$ sélectionné par le sélecteur spatial $SE_1$.
Le sélecteur spectral $SE_2$ a une fonction de filtre accordable. Il peut par exemple comporter :

- un démultiplexeur comportant une entrée recevant le signal sélectionné par le sélecteur spatial et une pluralité de sorties,
- un multiplexeur comportant une pluralité d'entrées et une sortie fournissant le signal associé au canal sélectionné parmi la pluralité de canaux du signal sélectionné par le sélecteur spatial,
- une pluralité d'interrupteurs optiques tels que des amplificateurs optiques à semiconducteur ayant chacun une entrée reliée à une sortie du démultiplexeur et une sortie reliée à une entrée du multiplexeur.

En référence à la figure 1, chacun des $C_sxP_s$ modules de sélection $S_1$ à $S_{CsxPs}$ va sélectionner un signal $F_t$ particulier et extraire de ce signal un canal particulier qui est envoyé sur un des $C_sxP_s$ régénérateurs optiques $RO_k$.
Les canaux destinés à une fibre de sortie $O_m$ (m variant de 1 à $P_s$) sont d'abord multiplexés par un des $P_s$ multiplexeurs $MO_1$ à $MO_{Ps}$ ayant chacun $C_s$ entrées et une sortie reliée à un des $P_s$ ports de sorties.
Un tel commutateur présente cependant certaines difficultés.
Ainsi, ce commutateur implique un grand nombre de portes optiques nécessaires à la réalisation des modules de sélection. Chacun des CsxPs ports de sorties avant multiplexage vers les fibres de sortie implique un module de sélection, donc un sélecteur spatial et un sélecteur spectral permettant de sélectionner un canal, ces deux sélecteurs comportant un grand nombre d'interrupteurs optiques. Ce nombre d'interrupteurs optiques implique non seulement un coût élevé mais également une forte consommation d'énergie ainsi qu'une taille importante pour le commutateur.
La présente invention vise à fournir un module de sélection pour commutateur de signaux optiques permettant de réduire le nombre de portes optiques utilisées dans ledit commutateur et de diminuer de ce fait la consommation globale et la taille du commutateur.
La présente invention propose à cet effet un module de sélection pour commutateur de signaux optiques, ce module comportant un sélecteur spatial comprenant :

- une pluralité d'entrées recevant chacune un signal optique multiplexé en longueur d'onde comportant une pluralité de canaux associés chacun à une longueur d'onde distincte,
- une sortie délivrant un signal sélectionné parmi ladite pluralité de signaux multiplexés en longueur d'onde,

ledit module étant **caractérisé en ce qu'**il comporte une pluralité de sélecteurs spectraux, chacun des desdits sélecteurs spectraux réalisant la sélection d'un canal parmi la pluralité de canaux dudit signal sélectionné par ledit sélecteur spatial.
L'invention nous permet de tirer avantage du fait que, sur une fibre d'entrée donnée et pendant un même intervalle de temps, plusieurs paquets optiques peuvent être adressés à la même fibre de sortie. Le module selon l'invention permet de réaliser une étape de sélection de plusieurs canaux (correspondant chacun à un paquet optique) destinés en même temps à une même fibre de sortie. Plusieurs sélecteurs spectraux partagent ainsi un même sélecteur spatial ; un tel partage permet d'économiser un grand nombre de portes optiques dont le dénombrement sera précisé par la suite.

Avantageusement, le module selon l'invention comporte un premier coupleur optique ayant une entrée reliée à ladite sortie dudit sélecteur spatial et une pluralité de sorties, chacune desdites sorties étant reliée à une entrée d'un desdits sélecteurs spectraux.

Avantageusement, ledit sélecteur spatial comporte:

- un second coupleur optique ayant un nombre d'entrées égal au nombre d'entrées dudit sélecteur spatial et une sortie,
- une pluralité d'interrupteurs optiques associés chacun à une desdites entrées dudit coupleur optique,

chaque interrupteur optique comportant une entrée qui constitue une entrée dudit sélecteur spatial et une sortie couplée à ladite entrée associée dudit second coupleur optique.

Avantageusement, lesdits interrupteurs optiques dudit sélecteur spatial sont des amplificateurs optiques à semiconducteur.

De manière avantageuse, chacun desdits sélecteurs spectraux comporte :

- un démultiplexeur comportant une entrée recevant ledit signal sélectionné par ledit sélecteur spatial et une pluralité de sorties,
- un multiplexeur comportant une pluralité d'entrées et une sortie fournissant le signal associé au canal sélectionné parmi la pluralité de canaux dudit signal sélectionné par ledit sélecteur spatial
- une pluralité d'interrupteurs optiques ayant chacun une entrée reliée à une sortie dudit démultiplexeur et une sortie reliée à une entrée dudit multiplexeur.

Avantageusement, lesdits interrupteurs optiques dudit sélecteur spectral sont des amplificateurs optiques à semiconducteur.

De manière avantageuse, le module de sélection selon l'invention comporte un amplificateur optique ayant une entrée reliée à la sortie dudit sélecteur spatial et produisant en sortie une amplification dudit signal sélectionné par ledit sélecteur spatial.

La présente invention a également pour objet un commutateur de signaux optiques recevant une pluralité L de signaux d'entrée multiplexés en longueur d'onde et ayant $P_s$ ports de sortie fournissant des signaux de sortie multiplexés en longueur d'onde, chaque signal de sortie comportant une pluralité Cs de canaux associés chacun à une longueur d'onde, chacun desdits L signaux d'entrée comportant une pluralité $C_e$ de canaux associés chacun à une longueur d'onde, ledit commutateur comportant :

- un étage de diffusion comportant L coupleurs optiques associés respectivement auxdits L signaux d'entrée, chacun desdits L coupleurs optiques recevant en entrée ledit signal d'entrée associé et diffusant ledit signal vers une pluralité de ports de sortie,
- un étage de sélection comportant :
  - o $C_s x P_s$ sorties,
  - o une pluralité de modules de sélection ayant chacun L entrées, ladite pluralité de modules de sélection comportant des moyens pour sélectionner sur une desdites $C_s x P_s$ sorties un desdits $C_e$ canaux associés à un desdits L signaux d'entrée diffusés,

ledit commutateur étant caractérisé en ce que ledit étage de sélection comporte au moins un module de sélection selon l'invention.

De manière avantageuse, ledit au moins un module de sélection comporte n sorties affectée chacune à la sélection d'un canal parmi la pluralité de canaux dudit signal sélectionné par ledit sélecteur spatial, n étant un nombre entier strictement supérieur à 1 et strictement inférieur à $C_e/P_s$ +1.

Ainsi, on peut montrer qu'il y a toujours un ensemble de n canaux appartenant au même signal d'entrée qui va être adressés à la même fibre de sortie, n étant strictement inférieur à $C_e/P_s$ +1. Ces n canaux peuvent donc partager le même sélecteur spatial.

De manière particulièrement avantageuse, $U_k$ modules sont associés à chacun des $P_s$ ports de sortie, chacun desdits $U_k$ modules comportant k sorties réalisant chacune la sélection d'un canal parmi la pluralité de canaux dudit signal sélectionné par ledit sélecteur spatial, Ce étant un multiple entier de $P_s$ supérieur à 1, k variant de 1 à $C_e/P_s$ et $u_k$ étant défini par la relation :

$$u_k = E\left(\frac{C_S - v_k - L.(k-1)}{k}\right) + (C_S - v_k - L.(k-1))\text{modulo}[k]$$

avec

$$v_k = v_{k+1} + k.u_k \text{ et } \frac{v_{Ce}}{Ps} = 0,$$

l'opérateur E() désignant la fonction partie entière et les $u_k$ modules étant des modules selon l'invention pour k variant de 2 à $C_e/P_s$.

Ainsi, pour une fibre de sortie donnée, il existe, parmi tous les ports d'entrée du commutateur associés aux fibres d'entrée, au moins $u_k$ ensembles de k canaux d'un même signal d'entrée multiplexé et adressés à cette fibre de sortie donnée. Autrement dit, on aura un nombre de sélecteurs spatiaux égal à

$$\left(\sum_{k=1}^{\frac{Ce}{Ps}} u_k\right).P_S$$

au lieu de $C_s x P_s$ sélecteurs spatiaux comme dans le commutateur représenté en figure 1.

Avantageusement, le commutateur comporte $P_s$ multiplexeurs ayant chacun $C_s$ entrées et une sortie reliée à un desdits $P_s$ ports de sortie.

D'autres caractéristiques et avantages de la présente invention apparaîtront dans la description suivante d'un mode de réalisation, donné à titre illustratif et nullement limitatif.

Dans les figures suivantes :

- La figure 1 représente un commutateur optique selon l'art antérieur,
- La figure 2 représente un module de sélection pour commutateur optique selon l'art antérieur,
- La figure 3 représente un module de sélection pour commutateur optique selon l'invention.

Les figures 1 et 2 ont déjà été décrites en relation avec l'état de la technique.

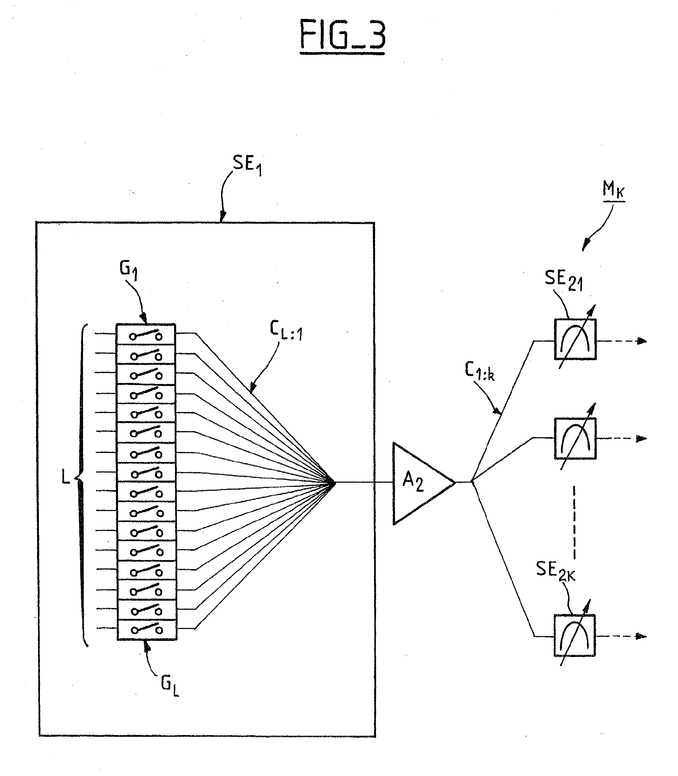

La figure 3 représente un module de sélection $M_k$ selon l'invention.

Le module $M_k$ comporte :

- un sélecteur spatial $SE_1$,
- un amplificateur $A_2$,
- un coupleur $C_{1:k}$,
- k sélecteurs spectraux $SE_{21}$ à $SE_{2k}$.

Le sélecteur spatial $SE_1$ comporte:

- L entrées reliées chacune à une porte optique $G_t$ (t variant de 1 à L),
- un coupleur optique $C_{L:1}$ permettant de raccorder L entrées à une sortie.

Chaque porte optique $G_t$ est un interrupteur optique tel qu'un amplificateur optique à semiconducteur activé uniquement lorsqu'il doit transmettre un signal.

Chacune des L entrées reçoit un signal WDM comportant une pluralité de canaux associés chacun à une longueur d'onde.

Ainsi, le sélecteur spatial $SE_1$ permet d'envoyer sur sa sortie un seul des L signaux reçus.

Le signal sélectionné spatialement est ensuite amplifié par l'amplificateur $A_2$ puis diffusé vers les sélecteurs spectraux $SE_{21}$ à $SE_{2k}$ via le coupleur $C_{1:k}$.

Le coupleur $C_{1:k}$ comporte une entrée reliée à la sortie du sélecteur spatial et k sorties, chacune desdites sorties étant reliée à une entrée d'un desdits sélecteurs spectraux $SE_{21}$ à $SE_{2k}$.
Chacun des sélecteurs spectraux $SE_{21}$ à $SE_{2k}$ permet alors de sélectionner un canal parmi la pluralité canaux compris dans le signal sélectionné par le sélecteur spatial $SE_1$.
Le module $M_k$ permet donc de sélectionner spatialement un signal WDM parmi L signaux WDM puis d'extraire de ce signal sélectionné spatialement k canaux correspondant chacun à une longueur différente.
Chacun des sélecteurs spectraux $SE_{21}$ à $SE_{2k}$ peut par exemple comporter :

- un démultiplexeur comportant une entrée recevant le signal sélectionné par le sélecteur spatial et une pluralité de sorties,
- un multiplexeur comportant une pluralité d'entrées et une sortie fournissant le signal associé au canal sélectionné parmi la pluralité de canaux du signal sélectionné par le sélecteur spatial,
- une pluralité d'interrupteurs optiques tels que des amplificateurs optiques à semiconducteur ayant chacun une entrée reliée à une sortie du démultiplexeur et une sortie reliée à une entrée du multiplexeur.

De tels modules $M_k$ peuvent être avantageusement utilisés dans un commutateur optique du type de celui représenté en figure 1.
En effet, on montre qu'il y a toujours un ensemble de n canaux appartenant au même signal d'entrée qui va être adressé à la même fibre de sortie, n étant strictement inférieur à $C_e/P_s$ +1. Ces n canaux peuvent donc partager le même sélecteur spatial.
Plus précisément, pour une fibre de sortie donnée, il existe, parmi tous les ports d'entrée du commutateur associés aux fibres d'entrée, au moins $u_k$ ensembles de k canaux provenant du même port d'entrée et adressés à cette fibre de sortie donnée, uk étant défini par la relation suivante :

$$u_k = E\left(\frac{C_S - v_k - L.(k-1)}{k}\right) + (C_S - v_k - L.(k-1))\text{modulo}[k]$$

avec

$$v_k = v_{k+1} + k.u_k \text{ et } \frac{v_{Ce}}{Ps} = 0,$$

avec k variant de 1 à $C_e/P_s$.
On peut associer, à chacun des $P_s$ ports de sortie, $u_k$ modules de sélection $M_k$ avec k variant de 1 à $C_e/P_s$, soit un total de

$$\left(\sum_{k=1}^{\frac{Ce}{Ps}} u_k\right)$$

modules par port de sortie.
Le module $M_1$ désigne un module de sélection selon l'art antérieur tel que le module S représenté en figure 2.
On aura ainsi, dans un commutateur comportant des modules de sélection selon l'invention, un nombre de sélecteurs spatiaux égal à

$$\left( \sum_{k=1}^{\frac{Ce}{Ps}} u_k \right) . P_S$$

au lieu de $C_s x P_s$ sélecteurs spatiaux comme dans le commutateur représenté en figure 1.

Prenons un exemple numérique illustrant le propos ci-dessus avec $P_e$=L=$P_s$=8 et $C_e$=$C_s$=32 ; on considère ainsi un commutateur optique ayant huit fibres WDM d'entrée et huit fibres WDM de sortie. Chacune des fibres d'entrée et de sortie a 32 canaux et tous les canaux sont modulés à 10 Gbit/s de sorte que la capacité globale du commutateur est de 2,56 Tbit/s.

Dans ce cas, en appliquant la relation donnant $u_k$, on obtient : $u_4$=2, $u_3$=4, $u_2$=2 et $u_1$=8.

On a donc 2 modules $M_4$, 4 modules $M_3$ et 2 modules $M_2$ pour chaque fibre optique de sortie, les 8 autres modules de sélection M1 étant des modules conformes à l'art antérieur. Pour l'ensemble des fibres de sortie, on a 128 modules de sélection alors qu'on aurait 256 modules de sélection pour le commutateur selon la figure 1.

On a ainsi économisé 128 sélecteurs spatiaux ; chacun des sélecteurs spatiaux comportant par exemple 8 interrupteurs optiques, on a donc réduit le nombre de portes optiques de 1024.

Bien entendu, l'invention n'est pas limitée au mode de réalisation qui vient d'être décrit.

Notamment, les amplificateurs optiques à semiconducteurs utilisés dans les sélecteurs spectraux et spatiaux peuvent être remplacés par tout type d'interrupteurs optiques.

## Revendications

**1.** Module de sélection ($M_k$) pour commutateur de signaux optiques, ce module comportant un sélecteur spatial ($SE_1$) comprenant :

- une pluralité d'entrées recevant chacune un signal optique multiplexé en longueur d'onde comportant une pluralité de canaux associés chacun à une longueur d'onde distincte,
- une sortie délivrant un unique signal sélectionné parmi ladite pluralité de signaux multiplexés en longueur d'onde,

ledit module étant **caractérisé en ce qu'**il comporte une pluralité de sélecteurs spectraux ($SE_{21}$,..., $SE_{2k}$), chacun des desdits sélecteurs spectraux réalisant la sélection d'un canal parmi la pluralité de canaux dudit signal sélectionné par ledit sélecteur spatial ($SE_1$,).

**2.** Module de sélection ($M_k$) selon la revendication précédente **caractérisé en ce qu'**il comporte un premier coupleur optique ($C_{1:k}$) ayant une entrée reliée à ladite sortie dudit sélecteur spatial ($SE_1$) et une pluralité de sorties, chacune desdites sorties étant reliée à une entrée d'un desdits sélecteurs spectraux ($SE_{21}$,..., $SE_{2k}$).

**3.** Module de sélection ($M_k$) pour commutateur de signaux optiques selon l'une des revendications précédentes **caractérisé en ce que** ledit sélecteur spatial ($SE_1$,) comporte :

- un second coupleur optique ($C_{L:1}$) ayant un nombre d'entrées égal au nombre d'entrées dudit sélecteur spatial ($SE_1$) et une sortie,
- une pluralité d'interrupteurs optiques ($G_1$,...,$G_L$.) associés chacun à une desdites entrées dudit coupleur optique ($C_{L:1}$),

chaque interrupteur optique comportant une entrée qui constitue une entrée dudit sélecteur spatial ($SE_1$,) et une sortie couplée à ladite entrée associée dudit second coupleur optique ($C_{L:1}$)·

**4.** Module de sélection ($M_k$) pour commutateur de signaux optiques selon la revendication précédente **caractérisé en ce que** lesdits interrupteurs optiques ($G_1$,...,$G_L$) dudit sélecteur spatial ($SE_1$) sont des amplificateurs optiques à semiconducteur.

**5.** Module de sélection ($M_k$) pour commutateur de signaux optiques selon l'une des revendications précédentes **ca-**

**ractérisé en ce que** chacun desdits sélecteurs spectraux ($SE_{21}$,..., $SE_{2k}$) comporte :

- un démultiplexeur comportant une entrée recevant ledit signal sélectionné par ledit sélecteur spatial et une pluralité de sorties,
- un multiplexeur comportant une pluralité d'entrées et une sortie fournissant le signal associé au canal sélectionné parmi la pluralité de canaux dudit signal sélectionné par ledit sélecteur spatial
- une pluralité d'interrupteurs optiques ayant chacun une entrée reliée à une sortie dudit démultiplexeur et une sortie reliée à une entrée dudit multiplexeur.

**6.** Module de sélection ($M_k$) pour commutateur de signaux optiques selon la revendication précédente **caractérisé en ce que** lesdits interrupteurs optiques dudit sélecteur spectral sont des amplificateurs optiques à semiconducteur.

**7.** Module de sélection ($M_k$) pour commutateur de signaux optiques selon l'une des revendications précédentes **caractérisé en ce qu'**il comporte un amplificateur optique ($A_2$) ayant une entrée reliée à la sortie dudit sélecteur spatial ($SE_1$) et produisant en sortie une amplification dudit signal sélectionné par ledit sélecteur spatial ($SE_1$).

**8.** Commutateur de signaux optiques recevant une pluralité L de signaux d'entrée multiplexés en longueur d'onde et ayant $P_s$ ports de sortie fournissant des signaux de sortie multiplexés en longueur d'onde, chaque signal de sortie comportant une pluralité Cs de canaux associés chacun à une longueur d'onde, chacun desdits L signaux d'entrée comportant une pluralité $C_e$ de canaux associés chacun à une longueur d'onde, ledit commutateur comportant :

- un étage de diffusion comportant L coupleurs optiques ($D_1$-$D_L$) associés respectivement auxdits L signaux d'entrée, chacun desdits L coupleurs optiques recevant en entrée ledit signal d'entrée associé et diffusant ledit signal vers une pluralité de ports de sortie,
- un étage de sélection comportant :

  o $C_s$x$P_s$ sorties,
  o une pluralité de modules de sélection ayant chacun L entrées, ladite pluralité de modules de sélection comportant des moyens pour sélectionner sur une desdites $C_s$x$P_s$ sorties un desdits $C_e$ canaux associés à un desdits L signaux d'entrée diffusés,

  ledit commutateur étant **caractérisé en ce que** ledit étage de sélection comporte au moins un module de sélection selon l'une des revendications 1 à 7.

**9.** Commutateur de signaux optiques selon la revendication précédente **caractérisé en ce que** ledit au moins un module de sélection comporte n sorties affectées chacune à la sélection d'un canal parmi la pluralité de canaux dudit signal sélectionné par ledit sélecteur spatial, n étant un nombre entier strictement supérieur à 1 et strictement inférieur à $C_e/P_s$ +1.

**10.** Commutateur de signaux optiques selon l'une des revendications 8 ou 9 **caractérisé en ce que** $u_k$ modules sont associés à chacun des $P_s$ ports de sortie, chacun desdits $u_k$ modules comportant k sorties réalisant chacune la sélection d'un canal parmi la pluralité de canaux dudit signal sélectionné par ledit sélecteur spatial, Ce étant un multiple entier de $P_s$ supérieur à 1, k variant de 1 à $C_e/P_s$ et $u_k$ étant défini par la relation :

$$u_k = E\left(\frac{C_s - v_k - L.(k-1)}{k}\right) + (C_s - v_k - L.(k-1))\,\text{modulo}[k]$$

avec

$$v_k = v_{k+1} + k.u_k \text{ et } \frac{v_{Ce}}{Ps} = 0,$$

l'opérateur E() désignant la fonction partie entière et les $u_k$ modules étant des modules selon l'une des revendications 1 à 6 pour k variant de 2 à $C_e/P_s$.

**11.** Commutateur de signaux optiques selon l'une des revendications 8 à 10 **caractérisé en ce qu'**il comporte $P_s$ multiplexeurs ayant chacun $C_s$ entrées et une sortie reliée à un desdits $P_s$ ports de sortie.

FIG_1

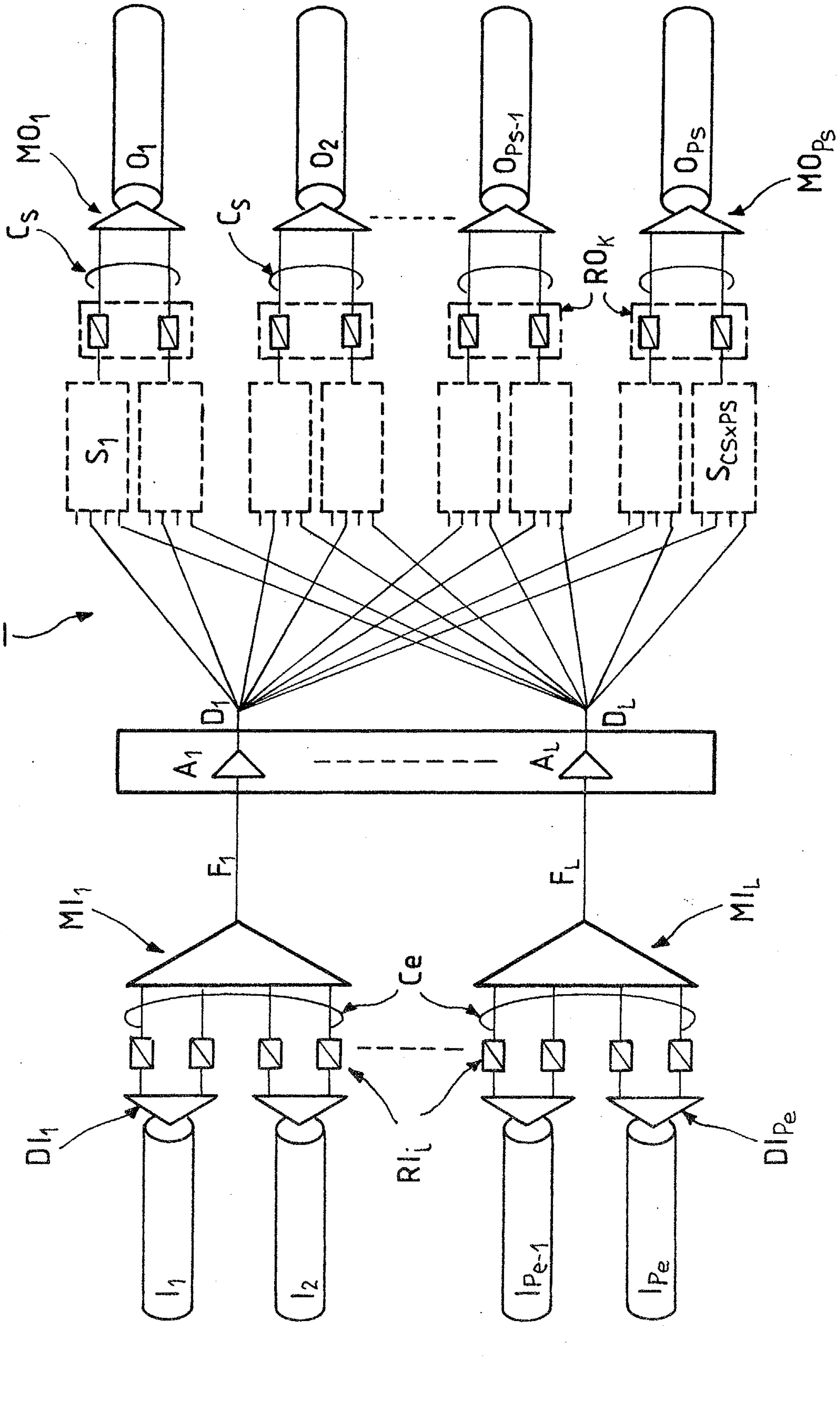
MO1
O1
O2
OPs-1
OPs
MOPs
Cs
Cs
ROk
S1
SCSxPS
10
D1
DL
A1
AL
F1
FL
MI1
MIL
Ce
DI1
RIi
DIPe
I1
I2
IPe-1
IPe

FIG_2

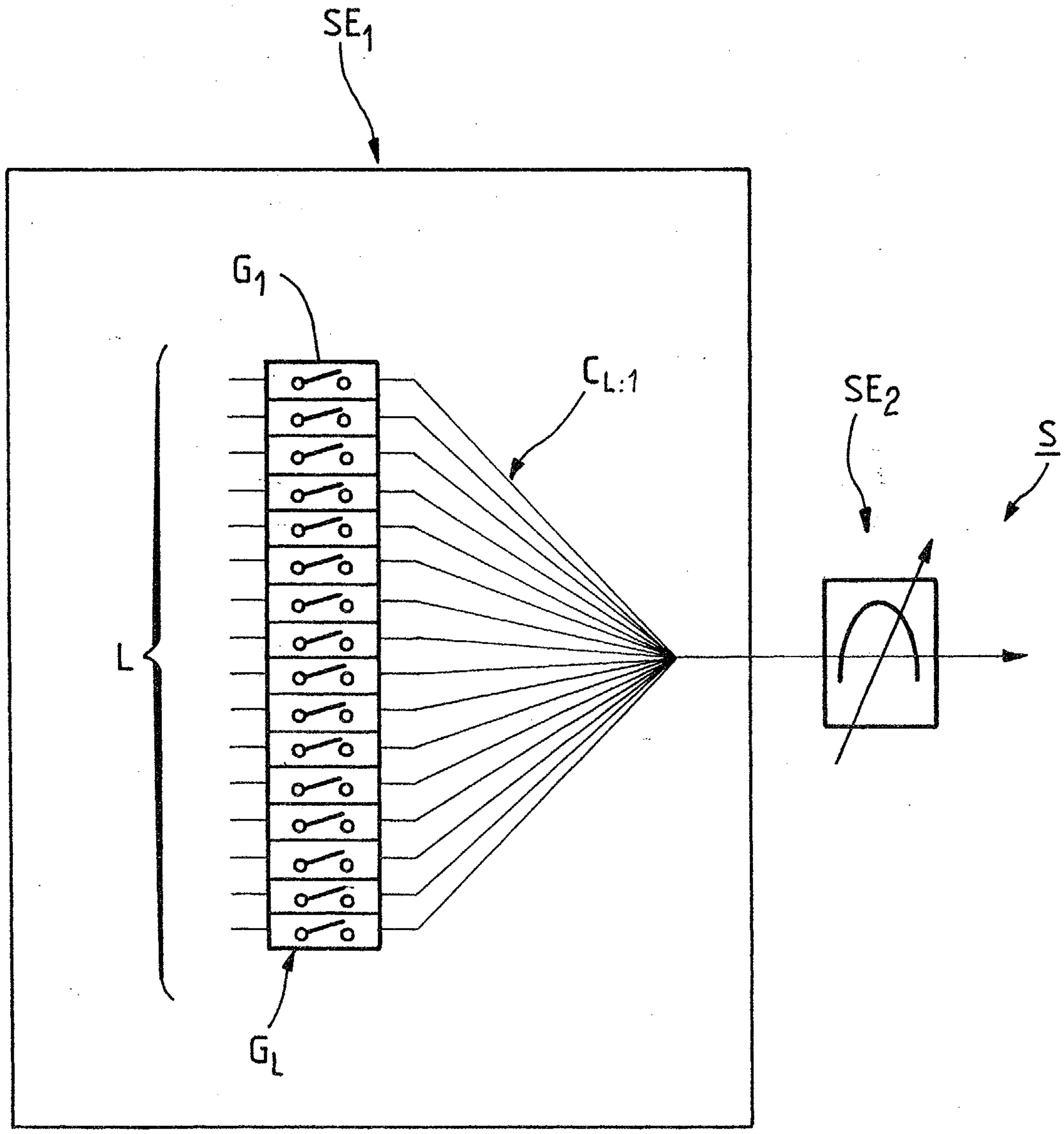

FIG_3